# FASCICULE DE BREVET EUROPEEN

(11) **EP 0 959 602 B1**
(45) Date de publication et mention de la délivrance du brevet: **15.02.2006**
(21) Numéro de dépôt: 99401160.9
(22) Date de dépôt: 11.05.1999
(51) Int. Cl.: H04L 29/06, H04L 12/56

(54) **Installation de transmission de messages à stations perfectionnées, et procédé correspondant**
Anordnung für Nachrichtübertragung mit verbesserten Stationen und entsprechendes Verfahren
Arrangement for the transmission of messages with improved stations and corresponding method

(30) Priorité: 18.05.1998 FR 9806244
(43) Date de publication de la demande: 24.11.1999
(73) Titulaire: INRIA INSTITUT NATIONAL DE RECHERCHE EN INFORMATIQUE ET EN AUTOMATIQUE, Rocquencourt F-78153 Le Chesnay (FR)
(72) Inventeur: Jacquet, Philippe, 78530 Buc (FR); Muhlethaler, Paul, 78600 Maisons-Laffitte (FR)
(74) Mandataire: Plaçais, Jean Yves

(56) Documents cités:
- EP-A- 0 767 564
- EP-A- 0 838 930
- WO-A-97/01940
- US-A- 5 412 654

## Description

L'invention concerne les réseaux ou installations informatiques qui permettent les échanges de messages entre des postes ou stations.

Elle concerne plus précisément, mais de façon non limitative, les réseaux dont la transmission est de type "radio-fréquence", c'est à dire ceux qui ne requièrent pas de liaisons dites "à support matériel" ou "filaires" (comme par exemple les câbles ou fibres optiques), comme for exemple celui décrit dans EP 0 838 930.

De tels réseaux, que l'on peut qualifier de locaux, sont faciles à implanter, mais ils présentent cependant un inconvénient lié à la faible portée des transmissions, typiquement quelques dizaines de mètres pour des débits de quelques Mégabits/seconde. Cette limitation étant due principalement aux lois de la physique qui régissent les transmissions radio, elle est donc incontournable.

L'homme de l'art a proposé certaines solutions pour pallier ce problème, comme par exemple augmenter les puissances d'émission, ou bien améliorer la réception en utilisant des antennes à gain.

Pour ce qui concerne plus particulièrement les réseaux locaux, il est d'usage d'utiliser des stations éloignées les unes des autres d'une centaine de mètres au moins. Certains de ces réseaux présentent une architecture classique dans laquelle les stations sont reliées au niveau "2", comme par exemple le niveau MAC ("Medium Access Control") ou le niveau LLC ("Line Load Control"), du modèle ISO ("International Standards Organization") de l'OSI ("Open System Interconnection"). Plus précisément, les stations comprennent un système d'exploitation, un étage (ou couche) dit "réseau" qui traite et génère des messages d'un premier format, une carte de communication pour les échanges de messages d'un second format avec d'autres stations appartenant, généralement, au même réseau, un étage dit "pilote" (connu en anglais sous le nom de "driver", comme notamment le driver MAC) pour placer des messages reçus de la carte ou de l'étage réseau respectivement dans le premier format ou dans le second format et les transmettre à l'étage réseau ou à la carte, ainsi que des moyens pour l'interfaçage des étages, carte et système d'exploitation entre eux (il s'agit généralement de logiciels et/ou câbles de connexion).

Dans ce type de réseaux, la solution proposée pour le relayage de messages (ou trames) consiste à utiliser au niveau 2 de chaque station des techniques du type de celles décrites dans le Brevet du Demandeur FR 2 736 230. Ces techniques requièrent des cartes réseaux dites "intelligentes" possédant leurs propres ressources matériel et logiciel. De telles cartes sont complexes et couteuses, ce qui va à l'encontre de ce qui se fait dans les réseaux filaires où les cartes sont de conception simple.

L'invention a donc pour but de procurer une installation de transmission de messages, et le procédé correspondant, qui ne présentent pas l'inconvénient précité.

Elle propose à cet effet une installation comportant les caractéristiques définies dans la revendication 1.

Par définition on qualifiera de "montant" un message (ou des données) provenant de l'étage pilote et se dirigeant vers l'étage réseau, tandis que l'on qualifiera de "descendant" un message (ou des données) provenant de l'étage réseau et se dirigeant vers l'étage pilote.

Grâce à l'invention, l'étage de gestion peut absorber un message montant (par exemple filtrer qualitativement ou bien extraire des informations qui le concerne exclusivement), et/ou générer un message descendant (par exemple un message de service), et/ou intercepter un message descendant pour lui adjoindre des données ou pour générer un autre message descendant, et/ou intercepter un message montant pour le relayer (ou router), c'est-à-dire le transformer en un message descendant modifié au moins partiellement, et, éventuellement, le transmettre conjointement à l'étage réseau.

Ainsi, on entend par "décision de poursuite de la transmission", une décision de transformer un message montant en un message descendant, ou une décision de continuation de descente/montée d'un message descendant/montant, ou encore une décision de transformer un message montant en un premier message montant et un second message descendant, ou alors une décision d'interruption d'ascension d'un message montant dans le but de se servir de ses informations au niveau de l'étage de gestion (c'est notamment le cas des messages de service).

On peut donc conserver la carte de communication (ou carte réseau), l'étage pilote et l'étage (ou couche) réseau d'une station sans modifier leurs matériels et logiciels respectifs.

De préférence, le système d'exploitation des stations munies d'un étage de gestion comporte les caractéristiques définies dans la revendication 2, de sorte qu'une partie de la puissance de traitement et de la mémoire de la station soit utilisée pour la gestion de la connexion de cette station au réseau, sans que cela n'interfère avec d'autres applications (ou tâches).

Les messages au second format peuvent comprendre les caractéristiques définies dans l'une des revendications 3 à 11.

Selon l'invention, l'étage de gestion est capable d'assurer au moins une fonction (ou traitement) choisie parmi l'encapsulation/désencapsulation de messages à émettre ou reçus, la génération spontanée ou sur requête de messages de service, le routage d'information, la synchronisation de la station dans laquelle ledit étage de gestion est implanté et éventuellement celle d'autres stations du réseau auquel cette station est connectée.

On entend ici par routage la détermination d'une adresse de station intermédiaire pour (re)transmettre un message de façon optimale jusqu'à une ou plusieurs stations de destination finale, par interrogation d'une table de routage stockée dans l'étage de gestion, table pouvant être mise à jour à l'aide d'informations topologiques et/ou de voisinage fournies par des messages de service émis par les autres stations du réseau.

Par ailleurs, on entend par désencapsulation/encapsulation le retrait d'un message, ou l'ajout à celui-ci, d'une capsule formée notamment d'un couple d'adresses.

De plus, on entend par synchronisation "l'alignement" d'au moins les moyens d'émission/réception de la station sur le mode d'émission fréquentiel et le temps de référence commun du réseau ou d'au moins l'une de ses stations, de sorte qu'au moins les stations relais du réseau soient toutes synchronisées. Cette synchronisation peut être mise en oeuvre à l'aide des messages de synchronisation reçus des autres stations, mais elle peut être également initiée par l'étage pilote d'une station.

L'invention s'applique également aux stations munies d'au moins deux étages pilote reliés chacun respectivement, comme défini dans la revendication 16. Dans ce cas, l'un des réseaux est de type radio tandis que le ou les autres réseaux sont de préférence de type filaire. Ainsi, il est possible d'utiliser un réseau filaire comme raccourci, ou bien comme solution de secours lorsque la transmission radio s'avère impossible.

L'installation peut en outre comporter les caractéristiques définies dans la revendication 21. L'étage de gestion est alors agencé pour effectuer au moins deux fonctions (ou traitements) différentes, assurées par les moyens d'aiguillage.

L'invention propose également un procédé de transmission de messages (ou données ou trames) comportant les caractéristiques définies dans la revendication 32.

D'autres caractéristiques et avantages de l'invention apparaitront à l'examen de la description détaillée ci-après, et des dessins annexés, sur lesquels :
- la figure 1 est un schéma très simplifié illustrant l'architecture d'une station de l'art antérieur;
- les figures 2A et 2B sont des schémas très simplifiés illustrant les architectures de deux formes de réalisation de stations selon l'invention;
- les figures 3A et 3B sont des schémas simplifiés illustrant plus en détail les architectures des stations des figures 2A et 2B, lorsque leur étage de gestion est capable d'assurer des fonctions de routage et de traitement de messages de service;
- la figure 4 illustre un exemple de format de message utilisé dans les installations de l'art antérieur;
- la figure 5 illustre un exemple de format de message utilisé dans les installations selon l'invention;
- la figure 6 illustre un exemple d'aiguillage de message montant dans une station du type de celle illustrée sur la figure 2A;
- la figure 7 illustre un exemple de routage d'un message descendant dans une station du type de celle illustrée sur la figure 2A;
- la figure 8 est un diagramme bloc illustrant le traitement d'un message montant par l'étage de gestion;
- la figure 9 est une variante de la station illustrée sur la figure 3A.

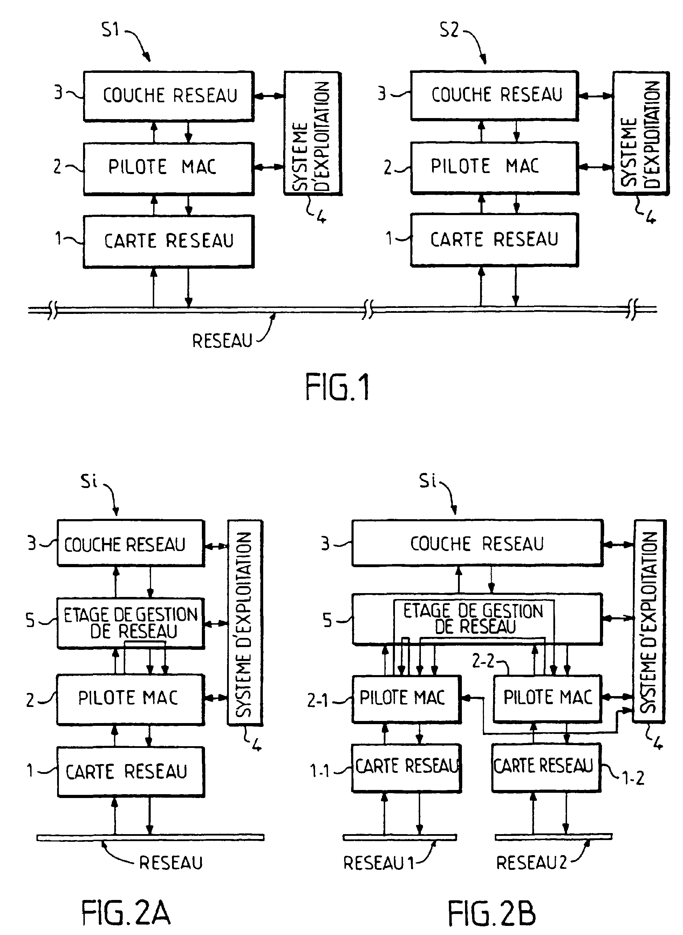

On se réfère tout d'abord à la figure 1 pour décrire un exemple d'installation de transmission de messages (ou données, ou encore trames) de l'art antérieur.

Sur cette figure 1, se trouve représentée une partie d'une installation de transmission de données (ou réseau) dans laquelle des stations Si (ici i = 1 et 2) peuvent échanger des messages (ou trames) comportant des données (ou informations). Ici, l'installation forme un réseau local de type radio-fréquence dans lequel les messages sont échangés par des ordinateurs PC (Personal Computer) via le médium éther.

Pour autoriser de telles transmissions, chaque station Si présente une architecture de communication particulière, organisée comme suit.

Tout d'abord, on prévoit une carte de communication 1 dite carte réseau qui comprend un transceiver pour l'émission/réception, un composant réseau susceptible de récupérer les messages transitant sur le médium (ici l'éther) et de les stocker dans une mémoire de type tampon après vérification de l'intégrité des messages (ou paquet, ou trame).

Ensuite, on prévoit un étage pilote 2 (ou en anglais driver) connecté à la carte réseau 1 par des moyens d'interface tels qu'un câble d'interconnexion, et permettant aux couches dites "hautes" des protocoles réseau de récupérer les messages ou paquets. Dans cet exemple, l'étage pilote est de type MAC. Mais, il pourrait s'agir d'un étage pilote d'un autre type comme par exemple de type LLC du modèle ISO de l'OSI. Habituellement, cet étage pilote 2 est une couche logiciel permettant d'initialiser la carte de communication 1 (carte réseau) et plus particulièrement son transceiver et son composant réseau.

On prévoit ensuite, "reliée" à l'étage pilote MAC 2, une couche dite "réseau" 3 qui est en fait la couche haute des protocoles réseau cités ci-avant. Il s'agit également, en général, d'une couche logiciel.

Habituellement, la couche réseau 3 et l'étage pilote MAC 2 sont reliés par des moyens d'interface, normalisés, de type logiciel. A titre d'exemple, dans les environnements de type Windows et Windows NT (marques déposées par la Société MICROSOFT) l'interface est connu sous le nom NDIS ("Network Device Interface Specification"). Dans un autre exemple correspondant à l'environnement Novel, cette interface est appelée ODI ("Open Data Lint Interface").

La couche (ou étage) réseau 3 et l'étage pilote MAC 2 sont tous les deux gérés par le système d'exploitation 4 de la station hôte dans laquelle ils sont installés. En d'autres termes, ils fonctionnent en utilisant les ressources du système d'exploitation 4 de la station Si.

Comme indiqué dans l'introduction, du fait des limitations physiques de la transmission radio, il est impératif que les stations du réseau local puissent relayer des messages ou trames. Or, dans les installations de l'art antérieur, ceci ne peut être effectué qu'en faisant appel à des techniques de relayage de trame, du type de celles décrites dans le Brevet du Demandeur FR 2 736 230, qui nécessitent pour être mises en oeuvre des cartes réseau (cartes de communication) "intelligentes" qui vont à l'encontre des habitudes de l'homme de l'art du fait de leur complexité et leur prix élevé.

L'invention vient donc apporter une solution particulièrement élégante à l'inconvénient présenté par les installations de transmission de messages de l'art antérieur.

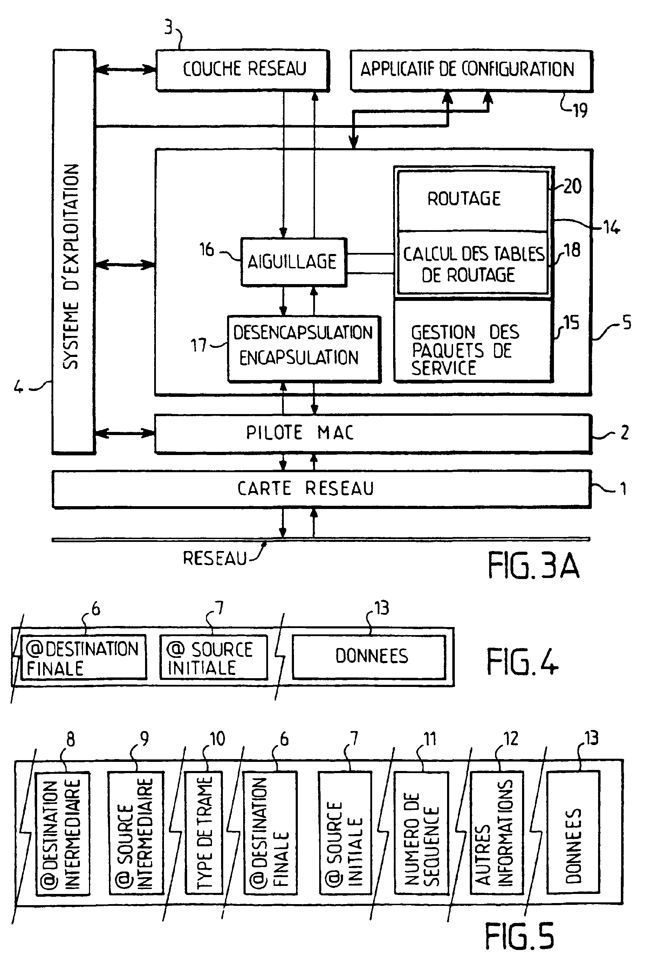

On se réfère maintenant aux figures 2A et 3A pour décrire l'architecture générale des stations d'une installation de transmission de messages selon l'invention.

Selon l'invention, on part de l'architecture classique décrite en référence à la figure 1, et l'on vient "intercaler" entre l'étage pilote MAC 2 et l'étage (ou couche) réseau 3 d'une station Si un étage (ou couche) de gestion de réseau 5 utilisant les ressources du système d'exploitation 4.

De préférence, et dans le but d'éviter toute interférence sensible entre les différentes applications ou tâches du système d'exploitation 4 de la station hôte Si et la tâche effectuée par cet étage de gestion de réseau 5, le système d'exploitation 4 de la station Si est choisi de type multitâches.

Les systèmes d'exploitation modernes disposent d'ordonnanceurs qui permettent de scruter les différentes tâches en attente tous les centièmes de seconde environ. Par ailleurs, il est parfois possible de donner des priorités aux différentes tâches en attente. Par conséquent, il est envisageable que des tâches de fond (celles qui sont exécutées en permanence) restent pratiquement imperceptibles à l'utilisateur d'une station.

On peut noter que dans l'architecture de la figure 1 les traitements de type temps réel sont exécutés par la carte réseau, de sorte que les tâches de l'étage de gestion de réseau n'aient pas de tels traitements à effectuer. Il est envisageable de traiter ces différentes tâches comme des tâches de fond.

Dans l'architecture classique illustrée sur la figure 1, les flux de données (ou messages) vont soit dans le sens montant, c'est-à-dire de la carte réseau 1 vers la couche réseau 3, soit dans le sens descendant, c'est-à-dire de la couche réseau 3 vers la carte réseau 1. Dans l'architecture selon l'invention, les flux de données ou messages qui doivent être échangés entre la couche réseau 3 et l'étage pilote 2 (dans un sens comme dans l'autre) sont interceptés. Il en résulte que dans une station donnée, l'étage pilote MAC 2 et l'étage de gestion de réseau 3 peuvent, dans certains modes de réalisation, traiter des messages (ou trames) qui ne sont pas destinés à la station considérée. Une telle possibilité va, comme nous le verrons ci-après, permettre à la station d'assurer des fonctions de connectivité et/ou de synchronisation qui dépassent la simple transmission, directe, d'une station source vers une station de destination finale.

L'étage de gestion de réseau 5 peut être capable, dans certains modes de réalisation, de générer de manière spontanée, ou bien sur requête d'un niveau supérieur comme par exemple la couche (ou étage) réseau 3, des messages, notamment de service, en direction d'autres stations du réseau local.

Il est clair que le nombre de traitements (ou fonctions) différents que l'étage de gestion de réseau 5 pourra effectuer dépendra des besoins. Ainsi, cet étage de gestion de réseau 5 pourra ne faire qu'intercepter des messages montants
ou descendants en vue de décider de leur transmission, moyennant un éventuel traitement, ou bien ne permettre que de générer des messages descendants d'un type choisi (par exemple de service ou de synchronisation), ou bien permettre à la fois l'interception et la génération de messages.

Sur la figure 2B se trouve illustrée une variante de l'architecture de la station de la figure 2A. Dans cette variante, la station est raccordée à deux réseaux (référencés réseau 1 et réseau 2). Pour ce faire, la station Si possède deux cartes de communication réseau 1-1 et 1-2 respectivement capables d'émettre des messages dans les média des réseaux 1 et 2, ou bien de recevoir des messages circulant dans ces média des réseaux 1 et 2, chaque carte réseau 1-i étant reliée à un étage pilote MAC 2-1 ou 2-2 par l'intermédiaire de moyens d'interface appropriés, chaque étage pilote MAC 2-i (i=1 et 2) étant lui-même "relié" à un unique étage de gestion de réseau 5.

Le réseau 1 est ici, par exemple, un réseau sans fil (ou réseau radio) tandis que le réseau 2 est un réseau filaire. Bien entendu, les deux réseaux pourraient être des réseaux radio émettant sur des fréquences différentes et selon des modes ou protocoles différents.

Ainsi, grâce à une telle variante de réalisation, il est possible de décider, au niveau de l'étage de gestion de réseau 5, d'émettre un message sur deux réseaux en même temps, ou bien de retransmettre un message issu d'un premier réseau dans un second réseau, éventuellement de façon momentanée, le second réseau étant ici utilisé soit comme raccourci, soit comme réseau de secours dans les cas où la station de destination finale d'un message ne peut pas être jointe par la station hôte ayant reçu ce message.

Bien entendu, l'étage de gestion de réseau 5 pourrait gérer plus de deux réseaux, par exemple trois, ou quatre, ou plus encore, moyennant l'utilisation d'autant de couches ou étages pilotes 2-i et de cartes de communication réseau 1-i qu'il y a de réseaux.

En d'autres termes, et en résumé, l'étage de gestion de réseau 5 d'une station Si permet de réaliser ce que l'homme de l'art appelle un pont "câble-radio".

Il est clair qu'un tel étage de gestion de réseau 5 est réalisé, de préférence, à l'aide d'un logiciel de sorte qu'il n'y ait pas besoin de modifier en quoi que ce soit ni la couche (ou étage) réseau 3 ni l'étage pilote MAC 2. Bien entendu, lorsque l'on possède les codes sources de l'étage pilote MAC 2, il est envisageable de réunir en un unique étage l'étage de gestion de réseau 5 et l'étage pilote MAC 2.

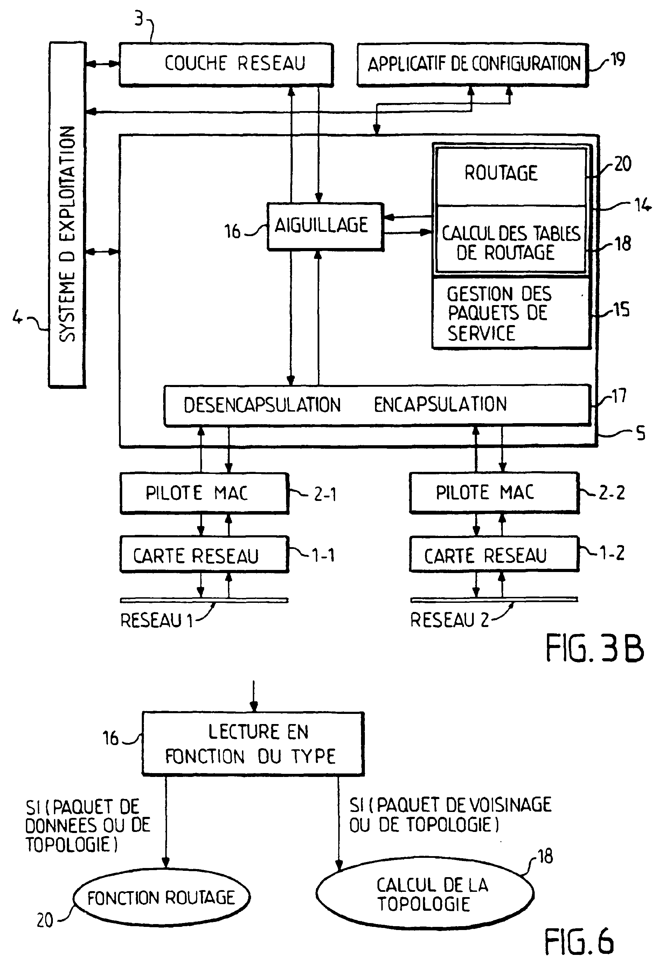

On se réfère maintenant aux figures 3A et 3B pour décrire plus en détail les architectures des stations illustrées respectivement sur les figures 2A et 2B.

Comme indiqué précédemment, l'étage de gestion de réseau 5 est capable d'assurer au moins une fonction, et de préférence au moins deux. C'est notamment le cas dans les exemples illustrés sur les figures 3A et 3B. En effet, l'étage de gestion de réseau 5 est agencé de manière à permettre le routage (dans le sens le plus large du terme), ainsi que la gestion de messages ou paquets de service.

Avant de décrire plus en détail l'étage de gestion de réseau 5, on va rappeler maintenant la constitution générale d'une trame (ou paquet, ou encore message) d'une installation de l'art antérieur.

Sur la figure 4 se trouve illustré de façon très schématique un message utilisé dans les installations de l'art antérieur. Un tel message comporte au moins un champ comprenant une paire d'adresses, comprenant une adresse de station de destination finale 6 et une adresse de station source initiale 7, ainsi que des données 13 formant le contenu du message à traiter. On entend ici par station de destination finale 6, la station qui est la destinataire du message, tandis que la station source initiale 7 est celle qui a émis le message en direction de la station de destination finale 6.

Bien entendu, la trame illustrée sur la figure 4 peut contenir éventuellement d'autres informations. De telles informations peuvent être trouvées, par exemple, dans la norme IEEE 802.11.

L'adresse de la station de destination finale est directement utilisée par la carte réseau 1 pour filtrer les trames qui lui parviennent, si bien que seules les trames, sauf cas d'espèces, qui sont arrivées à destination, et qui par conséquent concernent la station hôte, sont remontées vers la couche réseau 3.

Sur la figure 5 se trouve illustré un paquet (ou trame, ou encore message) du type de ceux qui peuvent être utilisés dans une installation selon l'invention. Comme on le verra plus loin, ce type de message pourrait comprendre sensiblement moins d'informations ou champs, notamment dans les modes dits "broadcast" ou "full promiscuous" qui sont des modes dits "à diffusion".

Une trame du type de celle illustrée sur la figure 5 comporte un premier champ constitué d'une première paire d'adresses, comprenant une adresse de station de destination finale 6 et une adresse de station source initiale 7, un second champ constitué d'une seconde paire d'adresses, formant capsule (ou partie de capsule), et comprenant une adresse de station de destination intermédiaire 8 et une adresse de station source intermédiaire 9, un champ 10 désignant le type de trame (ou en d'autres termes le type d'informations contenues dans le message ou la trame), un champ désignant 11 un numéro de séquence, éventuellement d'autres types d'informations 12, ainsi que les données 13, formant le contenu du message à traiter. Une telle trame est appelée trame au second format, en comparaison avec une trame qui "sort" de l'étage réseau 3 dite au premier format et qui ne comprend pas de seconde paire d'adresses. Par ailleurs, du fait de la présence de la seconde paire d'adresses 8 et 9, placée avant la première paire d'adresses 6 et 7, la trame est dite encapsulée.

On entend ici par station de destination intermédiaire 8, la prochaine station vers laquelle doit être émis un message, tandis que la station source intermédiaire 9 est la station qui va émettre le message destiné à la station de destination intermédiaire 8.

Comme on le verra ci-après, le champ 10 de type de trame va être utilisé pour aiguiller la trame parvenue dans l'étage de gestion de réseau 5, permettant ainsi d'optimiser son traitement.

Le champ 11 de numéro de séquence n'est pas obligatoire, mais il peut être utile dans la mesure où il permet de refuser des trames déjà reçues ou de ne pas prendre en compte certaines d'entre elles.

Enfin, la première paire d'adresses 6 et 7 va servir dans les fonctions de routage/relayage, qui seront décrites plus loin, afin d'optimiser le choix de la station de destination intermédiaire 8.

Il est clair que la station de destination finale 6 peut être identique à la station de destination intermédiaire 8. De même, lorsqu'un message est émis par une station hôte donnée, l'adresse de la station source initiale 7, qui est sa propre adresse, est identique à l'adresse de la station source intermédiaire 9.

Dans le mode de réalisation illustré sur les figures 3A et 3B, l'étage de gestion de réseau 5 doit assurer une fonction de routage de message, ainsi qu'une fonction de gestion de paquets (ou messages) de service. Pour ce faire, il comprend un module de gestion de service réseau 14 ainsi qu'un module de gestion de paquets (ou messages) de service 15 reliés à un module d'aiguillage 16 qui communique, d'une part, avec la couche réseau 3, et d'autre part, avec un module de désencapsulation/encapsulation 17, lui-même "relié" à l'étage pilote MAC 2.

Ce module de désencapsulation/encapsulation 17 a pour but de retirer ou d'adjoindre la capsule (ou la partie de capsule) composée notamment de la seconde paire d'adresses 8 et 9, selon que le sens de transmission des données est montant ou descendant.

Lorsque l'étage pilote MAC 2 reçoit de la carte réseau 1 un message au second format, du type de celui illustré sur la figure 5, il le fait remonter vers la couche réseau 3. Du fait de la présence de l'étage de gestion de réseau 5, le message au second format est intercepté en sortie de l'étage pilote MAC 2 avant qu'il n'arrive à la couche réseau 3. Plus précisément, ce message au second format est intercepté par le module de désencapsulation/encapsulation 17 qui en extrait la capsule, c'est-à-dire la seconde paire d'adresses 8 et 9. L'extraction peut être physique, c'est-à-dire que le message au second format peut se voir retirer cette seconde paire d'adresses 8 et 9 (ou capsule, ou partie de capsule), laquelle peut éventuellement être mémorisée, mais elle peut également être "virtuelle", la seconde paire d'adresses restant dans le message au second format (et ledit message restant éventuellement mémorisé dans son intégralité dans une mémoire appropriée). Le message désencapsulé par le module de désencapsulation/encapsulation 17 est alors transmis au module d'aiguillage 16, lequel va alors analyser le champ 10 de type de trame qu'il contient de manière à transmettre le message désencapsulé soit à l'un des modules 14 et 15 de l'étage de gestion de réseau 5, soit directement à la couche réseau 3, soit encore à la couche réseau 3 et à l'un au moins des modules 14 et 15.

Il faut noter, ici, que dans les variantes où l'étage de gestion de réseau ne fonctionne qu'en mode de type "broadcast" (ou à diffusion), il n'est pas indispensable qu'il comprenne un module de désencapsulation/encapsulation.

Bien entendu, on pourrait imaginer que l'aiguillage repose sur l'analyse d'un autre champ spécifique contenu dans le message au second format, par exemple dans son champ 12 désigné sur la figure 5 par "autres informations".

Dans l'exemple illustré sur la figure 3A, un message de service reçu par l'étage de gestion de réseau 5 est donc distribué par le module d'aiguillage 16 au seul module de gestion des paquets de service 15. De même, un message contenant des informations de routage ou devant être routé sera directement distribué par le module d'aiguillage au module de routage 14. Enfin, un message ne contenant que des données 13 (ou informations) concernant les couches hautes de la station sera directement distribué par le module d'aiguillage 16 à la couche réseau 3.

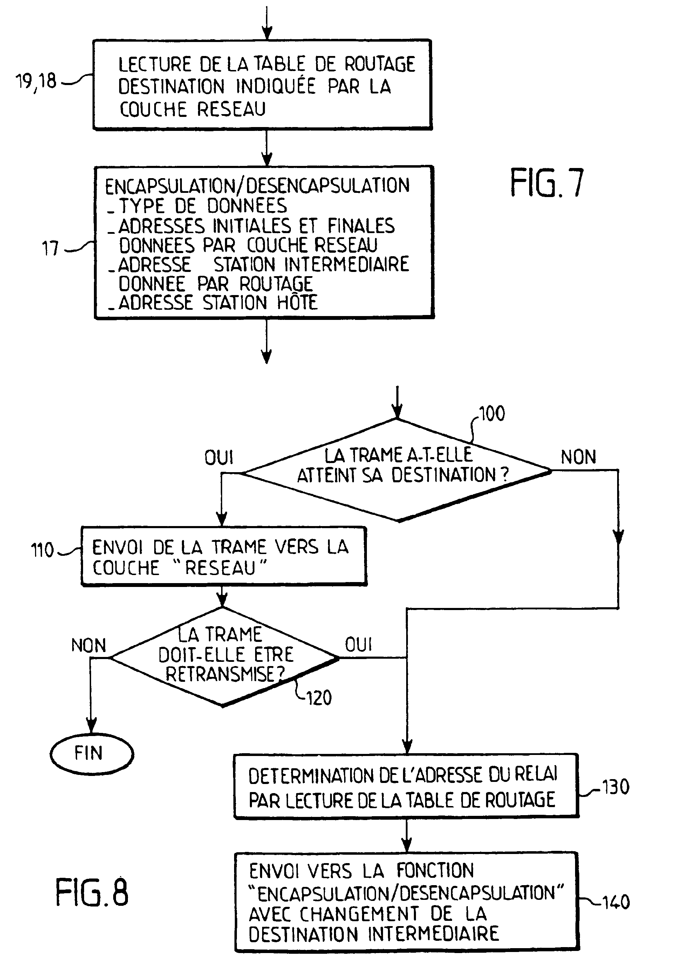

Le raisonnement inverse peut être appliqué pour un message descendant provenant d'une couche haute, telle que la couche réseau 3, et dirigé vers l'étage pilote MAC 2 (voir figure 7). Dans ce cas, le message qui est fourni par la couche réseau 3 est au premier format, dans la mesure où il contient des données 13 ainsi qu'une première paire d'adresses contenant une adresse de station de destination finale 6 et une adresse de station source initiale 7 qui dans ce cas se trouve être la station hôte. Mais ce message pourrait comprendre d'autres champs différents de la seconde paire d'adresses 8 et 9.

Ce message au premier format est, sauf exception liée à un mode de transmission de type "broadcast" (ou "à diffusion"), intercepté par l'étage de gestion de réseau 5, et plus précisément par son module d'aiguillage 16. En effet, un message au premier format provenant de la couche réseau 3 peut contenir des informations utiles à l'un des modules 14 ou 15, ou bien une requête d'émission d'un message de service. De plus, et surtout, le module de gestion de services réseau 14 (routage) a pour fonction de déterminer, à partir de l'adresse de la station de destination finale 6 contenue dans la première paire d'adresses du message au premier format reçu de la couche réseau 3, l'adresse de la station de destination intermédiaire 8 de la seconde paire d'adresses en direction de laquelle doit être émis le message.

Cet aiguillage s'effectue, comme dans le sens montant, à partir de l'analyse du champ 10, c'est-à-dire du type de trame ou message.

Comme cela sera expliqué plus loin, le module de gestion de service réseau 14 (routage) délivre à ce même module d'aiguillage 16 une adresse de station de destination intermédiaire 8.

De préférence, mais cela n'est pas obligatoire, le module d'aiguillage 16 transmet alors au module de désencapsulation/encapsulation 17 le message au premier format ainsi que l'adresse de la station de destination intermédiaire 8. Le module de désencapsulation/encapsulation 17 forme alors un message au second format (du type de celui illustré sur la figure 5) en adjoignant au message au premier format issu de la couche réseau 3 une capsule (ou partie de capsule) constituée de la seconde paire d'adresses 8 et 9, laquelle comprend l'adresse de la station de destination intermédiaire 8 déterminée par le module 14 ainsi que l'adresse de la station source intermédiaire 9, c'est-à-dire celle de la station hôte dans laquelle il est implanté.

Ce message au second format est alors transmis à l'étage pilote MAC 2, puis à la carte réseau 1 en vue de son émission dans le médium, ici l'éther, en direction de la station de destination intermédiaire 8 contenue dans la capsule (ou seconde paire d'adresses du message au second format).

Dans la variante illustrée sur la figure 3B, le module de désencapsulation/encapsulation 17 est capable de recevoir des messages au second format d'un premier étage pilote MAC 2-1 et d'un second étage pilote MAC 2-2, ainsi que de fournir à ces deux étages, soit séparément, soit simultanément, des messages au second format générés soit par l'un des modules 14 ou 15 de l'étage de gestion de réseau 5, soit par la couche réseau 3.

Bien entendu, dans la mesure où un message au premier format ne provient pas forcément d'une couche haute, du type de la couche réseau 3, le traitement peut être légèrement différent.

Ainsi, le module de gestion des paquets de service 15 peut, soit spontanément, soit sur requête d'une couche haute émettre un message de service en direction d'une ou plusieurs stations d'un ou plusieurs réseaux. On entend par "spontanément" un message émis automatiquement, par exemple périodiquement, ou bien émis lorsqu'un changement topologique a eu lieu dans une table de routage de la station concernée suite à la réception d'un message de service.

Un tel message de service peut également être destiné à l'ensemble des stations du réseau, par exemple lorsqu'il comprend des informations topologiques et/ou de voisinage destinées à la mise à jour des tables de routage des stations du réseau, et par conséquent destinées à améliorer leur connectivité. Dans ce cas, le message de service est constitué à partir d'une interrogation du contenu d'une table de routage (ou de plusieurs tables ou directoires) stockée(s) dans une mémoire 15 du module de gestion de service réseau 14 (routage).

Lorsque le message de service généré par le module de gestion des paquets de service 15 concerne une station de destination finale spécifique 7, ledit module 15 interroge le module de gestion de service réseau 14 de manière à déterminer une adresse de station de destination intermédiaire 8 permettant d'optimiser l'acheminement dudit message de service en direction de la station de destination finale 6. Le message de service et l'adresse de la station de destination intermédiaire 8 sont alors transmis au module d'aiguillage 16 puis au module de désencapsulation/encapsulation 17.

De même, lorsqu'un message de service montant parvient au niveau du module d'aiguillage 16, celui-ci en détectant par son champ 10 (type de trame) qu'il s'agit effectivement d'un message de service, le transmet au module de gestion des paquets de service 15, lequel en extrait les informations en vue de leur traitement.

Deux types de messages de service (ou trames) peuvent être reçus ou générés par le module de gestion des paquets de service 15. Tout d'abord, il s'agit des messages dits "de voisinage" qui sont habituellement envoyés selon un mode dit "en diffusion à un saut". De tels messages de voisinage comportent généralement la liste des voisins de la station hôte. Il sera commode de rajouter en correspondance de chaque station voisine un statut choisi parmi la liste suivante : lien asymétrique, lien symétrique, relais multipoints. Ces messages de voisinage sont accompagnés d'une estampille (contenue par exemple dans le champ 11 donnant le numéro de séquence) permettant de reconnaître un message portant des informations plus récentes.

Un statut de type "lien asymétrique" indique que la station entend une autre station et n'est pas certaine d'être entendue par celle-ci. En revanche, un statut de type "lien symétrique" indique que la station entend une autre station et est certaine d'être entendue par celle-ci. Un statut de type "relais multipoints" est un statut particulier qui permet de désigner des stations particulières permettant à une station donnée d'assurer des transmissions multipoints. Au fur et à mesure des échanges entre stations de messages de voisinage, les statuts des stations voisines s'affinent.

Les messages de topologie sont, quant à eux, envoyés, généralement, dans un mode dit "broadcast". Ils comportent une liste des voisins de la station émettrice (hôte) qui permet de construire la topologie complète du réseau.

Bien entendu, on pourrait envisager d'utiliser d'autres types d'informations topologiques, différents de ceux généralement utilisés dans l'approche par "état des liens" décrite ci-dessus. A titre d'exemple, on pourrait n'échanger que des informations portant sur la distance entre noeuds. Pour ce faire, il suffirait d'envoyer dans les messages de service le vecteur de distance qui donne pour un point donné la distance minimale qui le sépare de tout autre point du réseau. Une telle approche est généralement désignée par l'homme de l'art sous le nom de "vecteur de distance".

Selon le type d'approche choisi, les messages de topologie seront donc envoyés soit en mode broadcast général (approche de type état des liens), soit en broadcast à un saut (approche de type vecteur de distance).

Les messages de service qui ont été reconnus par le module d'aiguillage 16 comme porteurs d'informations topologiques ou de voisinage sont fournis au module de gestion de paquets de service 15 (voir figure 6). celui-ci en extrait les informations et les transmet au module de gestion de services réseau 14 (routage), et plus précisément à un module de calcul des tables de routage 18 qu'il comprend. Préférentiellement, la ou les tables (ou directoire) de routage sont stockées dans ce module de calcul 18, si bien qu'à réception des informations les moyens de calcul peuvent recalculer (ou modifier, ou encore compléter) ces tables de routage (ou en d'autres termes les mettre à jour).

Calculer une table de routage peut être considéré, en première approximation, comme calculer tous les chemins permettant à une station donnée hôte d'atteindre de façon optimale la ou les autres stations du (ou des) réseau(x) auquel elle est connectée.

Le calcul des tables de routage pourra être effectué par toute méthode connue de l'homme de l'art, selon le type d'approche choisie. On pourra notamment s'appuyer sur le calcul du nombre de sauts nécessaires pour atteindre une destination, par exemple en utilisant les algorithmes de type DJISTRA ou BELLMAN FORD.

Le mode de génération des messages de service dépendra de la variante choisie. Ainsi, dans un mode particulièrement simple, on peut envisager que le module de gestion des paquets de service 15 comprenne une temporisation (timer) capable de décompter une période temporelle de longueur prédéterminée, de sorte qu'à la fin de chaque période décomptée un message de service soit systématiquement généré. Le décomptage définit un critère de génération de message qui se trouve vérifié à chaque détection de fin de période. En variante, le message de service peut être généré par le module de gestion des paquets de service 15 sur un ordre (ou requête) reçu d'une couche haute, telle que la couche réseau 3 de la station hôte, ou bien sur requête d'un module de configuration 19. Comme indiqué précédemment, un message de service pourra être émis spontanément lorsqu'un changement topologique a eu lieu dans une table de routage de la station concernée suite à la réception d'un message de service.

Un tel module de configuration 19, peut être formé, par exemple, d'un logiciel utilitaire permettant à un utilisateur de l'ordinateur (ou station hôte) de saisir des informations ou choisir des options, permettant de fixer les paramètres de fonctionnement des différents modules, étages et cartes de la station. Le module de configuration 19 pourrait également permettre à un utilisateur de saisir toutes les informations, ou seulement certaines, permettant de constituer ou de modifier les différentes tables de routage stockées dans le module de gestion de service réseau 14 (routage). De même, un tel module de configuration 19 pourrait permettre de gérer la longueur de la durée de temporisation fixant la période temporelle du critère de génération de messages de service par le module de gestion des paquets de service 15.

Enfin, un tel module de configuration 19 pourrait permettre de visualiser sur le moniteur de la station les différentes tables topologiques, permettant ainsi, par exemple, de visualiser les liens entre les différentes stations du ou des réseaux auxquels la station, dans laquelle il est implanté, est raccordée.

On se réfère maintenant plus particulièrement à la figure 8 pour décrire un autre mode de fonctionnement d'une installation selon l'invention.

Jusqu'à présent il a été décrit des modes de fonctionnement particuliers dans lesquels, un message montant ou descendant était intercepté soit en vue d'être traité par l'un des modules 14 ou 15, soit en vue d'être transmis à la couche réseau 3 ou à l'étage pilote MAC 2. Cependant, selon l'invention, il est également possible de procéder à la retransmission d'un message reçu au second format, soit du fait qu'il ne concerne pas réellement la station qui vient de le recevoir, soit du fait qu'il concerne cette station, mais qu'il en concerne également d'autres (message à diffuser).

Il faut noter que du fait de la présence de la seconde paire d'adresses 8 et 9 en tête d'un message reçu au second format, celui-ci est automatiquement pris en compte et remonté par la carte réseau 1 vers l'étage pilote MAC 2 et l'étage de gestion de réseau 5 lorsque cette seconde paire d'adresses comporte comme adresse de station de destination intermédiaire 8 celle de la station hôte dans laquelle ladite carte réseau 1 est implantée. En d'autres termes, même si l'adresse de la station de destination finale 6 (contenue dans la première paire d'adresses) n'est pas celle de la station hôte, le message est remonté.

C'est donc l'étage de gestion de réseau 5 qui va décider de la poursuite de la transmission d'un message reçu au second format. Pour ce faire, l'étage de gestion de réseau 5 est capable, à réception d'un message montant, provenant de la carte réseau 1 via l'étage pilote MAC 2, d'effectuer un premier test 100 portant sur l'adresse de la station de destination finale 6 contenue dans la première paire d'adresses du message reçu au second format. Si le résultat de ce premier test est positif, alors le module d'aiguillage 16 transmet le message (éventuellement préalablement désencapsulé par le module de désencapsulation/encapsulation 17) à la couche réseau 3, ce qui constitue l'étape 110.

Puis, l'étage de gestion de réseau 5 effectue un second test 120 de manière à déterminer si le message reçu au second format doit également être retransmis vers une ou plusieurs autres stations du ou des réseaux. Si le résultat de ce test 120 est négatif, alors, le traitement effectué par l'étage de gestion de réseau 5 se termine. En revanche, si le résultat de ce test 120 est positif ou si le résultat du premier test 100 est négatif, alors le module de gestion de service réseau 14 (routage), et plus précisément son module d'optimisation de chemin 20, procède dans une étape 130 à la détermination de l'adresse de la station relais suivante vers laquelle doit être retransmis ledit message.

Pour ce faire, le module d'optimisation de chemin 20 va lire la ou les tables de routage stockées dans le module de calcul 18 pour en extraire une adresse de station de destination intermédiaire 8 et la transmettre au module d'aiguillage 16 qui va alors la communiquer au module de désencapsulation/encapsulation 17 en compagnie du message à retransmettre.

Bien entendu, en variante on peut envisager que le message reçu au second format demeure dans le module de désencapsulation/encapsulation 17, par exemple dans une mémoire appropriée, et que le module d'aiguillage 16 ne lui transmette que l'adresse de la station de destination intermédiaire 8. Le module de désencapsulation/encapsulation 17 n'a plus alors qu'à remplacer la seconde paire d'adresses contenue dans le message reçu au second format par une nouvelle seconde paire d'adresses formée de l'adresse de la station de destination intermédiaire fournie par le module de détermination du chemin optimal 20, ainsi que l'adresse de la station source intermédiaire 9 qui n'est rien d'autre que l'adresse de la station hôte. Cela constitue l'étape 140 qui met fin à la procédure de traitement par l'étage de gestion de réseau 5. Dans une telle situation, il est avantageux que tous les autres paramètres du message à retransmettre demeurent inchangés.

Il est clair que les messages au second format peuvent comporter un champ (par exemple 11 ou 12) permettant à la carte réseau 1 de les ignorer, sans qu'ils ne remontent, et par conséquent éviter que l'étage de gestion de réseau 5 travaille inutilement.

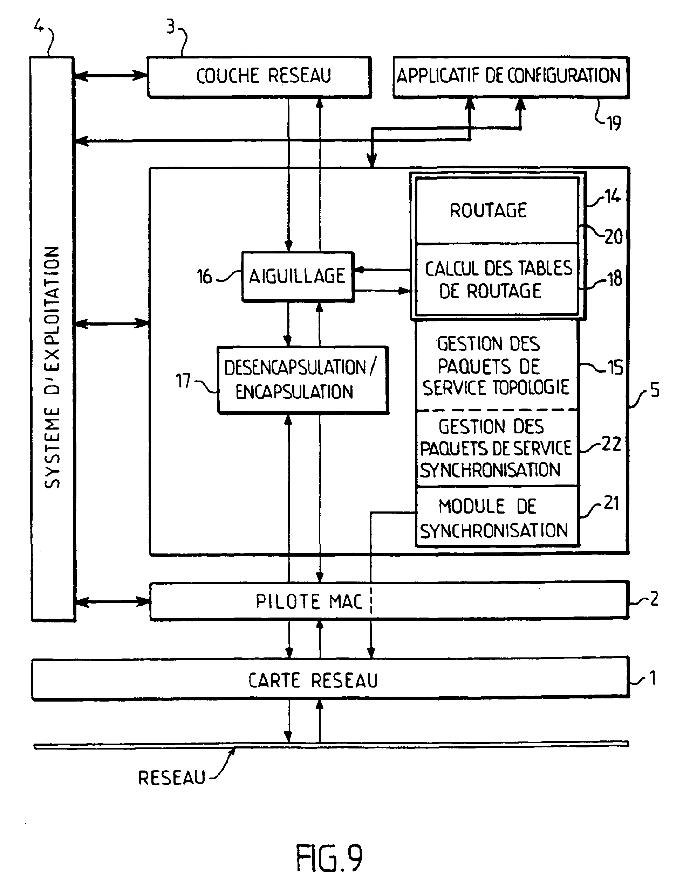

On se réfère maintenant à la figure 9 pour décrire une variante des modes de réalisation de l'étage de gestion de réseau 5 illustré sur les figures 3A et 3B.

Dans cette variante de réalisation, l'étage de gestion de réseau 5 comporte un module de synchronisation 21 permettant de synchroniser la station hôte, et plus précisément, au moins ses moyens d'émission/réception logés dans la carte réseau 1. On entend ici par synchronisation, aussi bien une synchronisation fréquentielle de manière à pouvoir caler la station sur la fréquence d'émission de messages de synchronisation, que la synchronisation temporelle de manière à fournir à ladite station hôte une référence de temps commune lui permettant de se caler effectivement sur le mode fréquentiel d'émission des messages de synchronisation.

Ce mode de synchronisation est particulièrement utile dans les réseaux du type dit "à saut de fréquence" dans lesquels la fréquence d'émission des messages varie au cours du temps, au niveau des stations, selon un schéma fréquentiel et temporel connu, par exemple.

Le module de synchronisation 21 peut être soit raccordé à la carte réseau 1 par l'intermédiaire de l'étage pilote MAC 2 (comme illustré sur la figure 9), soit être en mesure de fournir à cette carte réseau 1 des informations de synchronisation via le module d'aiguillage 16, le module de désencapsulation/encapsulation 17 et l'étage pilote MAC 2.

Dans la première hypothèse, c'est-à-dire lorsque le module de synchronisation 21 pilote directement la carte réseau via l'étage pilote MAC 2, on pourra prévoir que ledit pilotage sera exécuté par une primitive particulière de l'étage pilote MAC 2 ou bien par une primitive de configuration initiale, ce qui est classique dans les étages pilotes MAC connus.

Afin de pouvoir prendre en compte les messages de synchronisation circulant sur le médium, ici l'éther, il est avantageux que le module de gestion des paquets de service 15 comporte une partie 22 dédiée à la gestion des messages de synchronisation. Ainsi, la génération de messages de service, qu'il s'agisse de messages topologiques, de messages de voisinage ou de messages de synchronisation peut être gérée par un unique module de gestion de paquets de service 15. Bien entendu, la partie 22 de ce module de gestion de service, dédiée au message de synchronisation, est en relation étroite avec le module de synchronisation 21 de manière à lui fournir les informations de synchronisation contenues dans les messages de synchronisation reçus du module d'aiguillage 16.

En variante, le module de synchronisation pourrait comprendre ses propres moyens de gestion de paquets de service de synchronisation.

Les informations relatives à la fréquence commune, contenues dans les messages de synchronisation pourront comprendre soit la liste des fréquences du schéma d'évolution de la fréquence commune et les durées de séjour respectives de ces fréquences, soit un identifiant de liste de fréquences et de durées associées, les stations comportant alors une mémoire dans laquelle se trouve stockée une table de correspondance entre des identifiants de liste et des listes et durées.

L'invention permet également, grâce au module de synchronisation, de gérer les échanges de messages entre réseaux fonctionnant selon des synchronisations différentes.

Par ailleurs, grâce à l'étage de gestion de réseau 5, il est également possible de gérer les échanges de messages entre des réseaux ou sous-réseaux désignés par des numéros différents contenus dans un champ spécifique des messages au second format.

L'invention concerne également les procédés de transmission de messages (ou données, ou encore trames) utilisant les stations relais décrites ci-avant, et comportant l'une et/ou l'autre des étapes a) et b) suivantes :
a) intercepter chaque message (de données, de service (topologique, de voisinage ou de synchronisation) qui doit être échangé entre l'étage réseau 3 et l'étage pilote 2 d'une station Si (dans le sens montant ou descendant), puis analyser les informations qui sont contenues dans le message intercepté de manière à décider de la poursuite de leur transmission, moyennant un éventuel traitement (par exemple une désencapsulation suivie d'une transmission à l'un des modules 14 ou 15 ou à l'étage réseau 3, ou une encapsulation avec ou sans routage), en fonction d'au moins un critère portant sur les informations analysées, et de préférence sur un champ tel que le type desdites informations,
b) générer un message d'un type choisi (par exemple un message de service topologique ou de voisinage, ou encore de synchronisation), spontanément ou sur requête d'une couche haute (étage réseau 3 ou module de configuration 19), en vue de son émission dans le médium d'un réseau (ou dans celui de l'un au moins des réseaux lorsque la station est raccordée à plusieurs réseaux), dès qu'une condition choisie est vérifiée (par exemple à réception d'une requête ou à la fin d'une période de temporisation).

Le procédé pourra comprendre également toutes les étapes de traitement qui ont été décrites précédemment en référence aux variantes d'installations.

Dans ce qui précède on a parlé de stations (ordinateur de type PC) équipées de modules et autres moyens. Ces modules et moyens doivent être compris aussi bien en tant que composants électroniques spécifiques (ou circuits) qu'en tant que procédures programmées.

L'invention ne se limite pas aux modes de réalisation décrits ci-avant, seulement à titre d'exemple, mais elle s'étend aux variantes, d'installations comme de procédés, que pourra développer l'homme de l'art dans le cadre des revendications ci-après.

Ainsi, on a décrit des messages au second format comportant des premier et second champs constitué chacun d'une première ou seconde paire d'adresses. Cependant, on pourrait envisager qu'un message au second format ne comporte qu'un second champ, ce champ étant constitué, de préférence, de la seule adresse de la station intermédiaire déterminée par l'étage de gestion. De même, on pourrait envisager des modes de fonctionnement dans lesquels les messages au second format comportent un premier et un second champs, constitués respectivement de la seule adresse de la station source finale et de la seule adresse de la station intermédiaire déterminée par l'étage de gestion.

Par ailleurs, il sera envisageable que le second format puisse présenter, ou s'approche, des formes retenues respectivement par les normes 802.11 et HIPERLAN. Il est également envisageable que les formats précités puissent être utilisés avec de légères modifications relatives à l'utilisation de certains champs. Par exemple, la norme 802.11 contient des champs qui peuvent porter l'adresse des ponts entre le réseau radio et un système de distribution. Ces champs pourraient être employés pour identifier les stations intermédiaires. De même, la norme 802.11 offre la possibilité de distinguer les différents types de trames; cette possibilité pourrait être utilisée dans l'invention pour discerner les différentes trames (ou messages) de service.

## Revendications

1. Installation de transmission de messages comprenant des stations (S) comportant chacune :
- un système d'exploitation (4),
- un étage "réseau" (3) pour traiter et générer des messages d'un premier format,
- une carte de communication (1) propre à échanger des messages d'un second format avec au moins un réseau,
- un étage "pilote" (2) propre à placer des messages reçus de la carte (1) ou de l'étage réseau (3) respectivement dans le premier format ou le second format pour les transmettre audit étage réseau (3) ou à ladite carte (1), et
- des moyens d'interface desdits étages, carte et système d'exploitation entre eux,
**caractérisée en ce que** certaines stations (S) au moins comprennent un étage de gestion (5) couplé audit système d'exploitation (4) par lesdits moyens d'interface et propre à intercepter les messages au premier format devant être échangés par l'étage réseau (3) et l'étage pilote (2), de manière à analyser les informations qu'ils contiennent et décider de la poursuite de leur transmission, en fonction d'au moins un critère portant sur lesdites informations analysées, et/ou propre à générer des messages d'un type choisi, au second format, en vue de leur émission dans le réseau via ladite carte (1) lorsqu'une condition d'émission choisie est vérifiée.

2. Installation selon la revendication 1, **caractérisée en ce que** ledit système d'exploitation (4) est de type multitâches.

3. Installation selon l'une des revendications 1 et 2, **caractérisée en ce que** lesdits messages au second format comprennent un premier champ (6,7).

4. Installation selon la revendication 3, **caractérisée en ce que** ledit premier champ comporte au moins une adresse de station de destination finale (6).

5. Installation selon la revendication 4, **caractérisée en ce que** ledit premier champ comporte une première paire d'adresses comprenant une adresse de station source initiale (7) et l'adresse de station de destination finale (6).

6. Installation selon l'une des revendications 1 à 5, **caractérisée en ce que** lesdits messages au second format comprennent un second champ (8,9) formant au moins partie de capsule.

7. Installation selon la revendication 6, **caractérisée en ce que** ledit second champ comporte au moins une adresse de station de destination intermédiaire (8).

8. Installation selon la revendication 7, **caractérisée en ce que** ledit second champ comporte une seconde paire d'adresses comprenant l'adresse de la dernière station, dite station source intermédiaire (9), ayant émis ledit message au second format et l'adresse de station de destination intermédiaire (8).

9. Installation selon l'une des revendications 1 à 8, **caractérisée en ce que** lesdits messages au second format comprennent une donnée (10) représentative du type d'information qu'ils contiennent.

10. Installation selon la revendication 9, **caractérisée en ce que** ledit critère choisi porte sur le type des informations (10) contenues dans les messages reçues d'un étage.

11. Installation selon l'une des revendications 1 à 10, **caractérisée en ce que** lesdits messages au second format comprennent au moins une autre donnée, en particulier représentative de leur numéro de séquence (11).

12. Installation selon l'une des revendications 1 à 11, **caractérisée en ce que** chaque réseau est choisi parmi le réseau radio et le réseau filaire.

13. Installation selon la revendication 12, **caractérisée en ce que** le format d'un réseau radio est choisi parmi au moins le format de la norme "HIPERLAN" et le format de la norme IEEE 802.11, et **en ce que** le format d'un réseau filaire est choisi parmi au moins les standards ISO pour les normes IEEE 802.3, 802.5 et 802.14.

14. Installation selon l'une des revendications 4 à 13, **caractérisée en ce que** ledit étage de gestion (5) comprend des moyens de routage (14,18,20) propres à stocker au moins une table de routage comportant au moins les adresses des stations de destination intermédiaire avec lesquelles la station qui l'accueille peut échanger des messages au second format, et **en ce que** lesdits moyens de routage (14,18,20) sont agencés pour, d'une part, extraire le premier champ (6,7) d'un message reçu, pour déterminer dans la table de routage une adresse de station de destination intermédiaire (8) permettant d'optimiser la transmission dudit message jusqu'à la station de destination finale (6) dont l'adresse est contenue dans ledit premier champ extraite, et d'autre part, former une second champ contenant ladite adresse de station de destination intermédiaire extraite (8) et destiné, soit, lorsque le message est issu de l'étage pilote (2), à remplacer celui initialement contenue dans le second champ du message reçu à retransmettre, soit, lorsque le message est issu de l'étage réseau (3), à compléter son contenu en vue de sa transmission.

15. Installation selon la revendication 14, **caractérisée en ce que** lesdits moyens de routage (14,18,20) comprennent en outre des moyens de calcul (18) propres à modifier le contenu de ladite table de routage à partir d'informations de routage contenues dans des messages qui sont du type messages de service reçus au second format provenant du réseau.

16. Installation selon l'une des revendications 14 et 15, **caractérisée en ce que** l'une au moins des stations (S) munies d'un étage de gestion (5) comprend au moins un autre étage pilote (2-2) relié audit étage de gestion et à une autre carte de communication (1-2) connectée à un autre réseau, et **en ce que** ledit étage de gestion (5) est propre à choisir l'un au moins des réseaux en vue de la transmission de messages, en fonction de l'adresse de la station de destination intermédiaire (8) contenue dans le second champ du message à transmettre.

17. Installation selon l'une des revendications 5 à 16, **caractérisée en ce que** l'étage de gestion comprend des moyens de désencapsulation/encapsulation (17) propres à extraire un second champ, ou partie au moins de capsule, d'un message issu de l'étage pilote (2) ou à ajouter un second champ à un message destiné à une station au moins du réseau via cet étage pilote (2).

18. Installation selon l'une des revendications 1 à 17, **caractérisée en ce que** l'étage de gestion (5) comprend des moyens de gestion de messages qui sont du type messages de service (15).

19. Installation selon la revendication 18, **caractérisée en ce que** les moyens de gestion de messages de service (15) sont propres à générer des messages de service "à diffuser" pour de multiples stations de destination finale appartenant à au moins un réseaux.

20. Installation selon l'une des revendications 18 et 19, **caractérisée en ce que** les moyens de gestion de messages de service (15) comprennent des moyens de temporisation propres. à décompter une durée choisie et **en ce que** la condition choisie d'émission d'un message de service est verifiée en fin de décomptage.

21. Installation selon l'une des revendications 18 à 20 prise en dépendance avec la revendication 14, **caractérisée en ce que** la condition choisie d'émission d'un message de service est vérifiée à chaque modification de la table de routage.

22. Installation selon l'une des revendications 1 à 21, **caractérisée en ce que** les stations (S) comprennent des moyens de configuration (19) des différents étages et carte(s) raccordés à ceux-ci ainsi qu'audit système d'exploitation par lesdits moyens d'interface.

23. Installation selon la revendication 18 en combinaison avec la revendication 22, **caractérisée en ce que** la condition choisie d'émission d'un message de service est vérifiée à la réception d'une requête locale de l'étage réseau (3) ou des moyens de configuration (19). .

24. Installation selon la revendication 16 en combinaison avec l'une des revendications 22 et 23, **caractérisée en ce que** lesdites informations de routage sont contenues dans des messages provenant des moyens de configuration (19).

25. Installation selon l'une des revendications 1 à 24, **caractérisée en ce que** l'étage de gestion (5) comprend des moyens de synchronisation (21,22) agencés pour genérer des messages qui sont du type messages de synchronisation en fréquence et en temps destinés à certaines autres stations, et, à réception d'un message de synchronisation, en extraire les informations de manière à placer les moyens d'émission/réception de la carte de communication (1) de sa station dans l'état correspondant auxdites informations extraites.

26. Installation selon la revendication 25, **caractérisée en ce que** les moyens de synchronisation (21,22) sont agencés pour générer ledit message de synchronisation de façon spontanée, en particulier périodiquement.

27. Installation selon l'une des revendications 25 et 26, **caractérisée en ce que** la condition choisie d'émission d'un message de synchronisation est vérifiée à la réception d'une requête locale de l'étage réseau (3) ou des moyens de configuration (19).

28. Installation selon l'une des revendications 25 à 27, **caractérisée en ce que** les moyens de synchronisation (21,22) sont agencés pour générer des messages d'interrogation requérant l'envoi d'un message de synchronisation.

29. Installation selon la revendication 9 en combinaison avec l'une des revendications 15 à 28, **caractérisée en ce que** ledit étage de gestion (5) comprend des moyens d'aiguillage (16) connectés auxdits moyens d'encapsulation/désencapsulation (17), auxdits moyens de routage (14,18,20), auxdits moyens de gestion de messages de service (15) et auxdits moyens de synchronisation (21,22).

30. Installation selon la revendication 29, **caractérisée en ce que** lesdits moyens d'aiguillage (16) sont propres à déterminer à partir du type desdits messages reçus l'étage (les étages), parmi l'étage réseau (3) et l'étage pilote (2), et/ou les moyens, parmi les moyens de routage (14,18,20), les moyens de désencapsulation/encapsulation (17), les moyens de synchronisation (21,22) et les moyens de gestion de messages de service (15), concerné(s) par un message qu'ils ont reçu, et à transmettre ledit message à l'étage (aux étages) ou moyens ainsi déterminé(s).

31. Installation selon l'une des revendications 1 à 30, **caractérisée en ce que** l'étage de gestion (5) fait partie de l'étage pilote (2).

32. Procédé de transmission de messages entre des stations (S) d'une installation selon l'une des revendications précédentes et comportant chacune:
un système d'exploitation (4),
un étage "réseau" (3) pour traiter et générer des messages d'un premier format,
une carte de communication (1) propre à échanger des messages d'un second format avec au moins un réseau,
un étage "pilote" (2) propre à placer des messages reçus de la carte (1) ou de l'étage réseau (3) respectivement dans le premier format ou le second format pour les transmettre audit étage réseau (3) ou à ladite carte (1), et
des moyens d'interface desdits étages, carte et système d'exploitation entre eux,
**caractérisée en ce qu'**il comprend l'une et/ou l'autre des étapes suivantes:
- intercepter les messages au premier format devant être échangés entre l' étage réseau (3) et l'étage pilote (2) d'une station (S), puis analyser les informations contenues dans lesdits messages interceptés de manière à décider de la poursuite de leur transmission, en fonction d'au moins un critère portant sur lesdites informations analysées,
- générer un message d'un type choisi au second format en vue de son émission dans le réseau lorsqu'une condition d'émission choisie est vérifiée.

## Claims

1. Message transmission installation comprising stations (S) each including:
- an operating system (4),
- a "network" stage (3) for processing and generating messages in a first format,
- a communication card (1) suitable for exchanging messages in a second format with at least one network,
- a "driver" stage (2) suitable for placing messages received from the card (1) or from the network stage (3) respectively in the first format or the second format so they can be transmitted to said network stage (3) or to said card (1), and
- means of interfacing said stages, card and operating system between themselves,
**characterized in that** at least some stations (S) include a management stage (5) coupled to said operating system (4) by said interface means and suitable for intercepting the messages in the first format that need to be exchanged by the network stage (3) and the driver stage (2), so as to analyse the information that they contain and decide on how to continue with their transmission, according to at least one criterion relating to said analysed information, and/or suitable for generating messages of a selected type, in the second format, with a view to their transmission in the network via said card (1) when a chosen transmission condition is verified.

2. Installation according to Claim 1, **characterized in that** said operating system (4) is of multitasking type.

3. Installation according to one of Claims 1 and Claim 2, **characterized in that** said messages in the second format include a first field (6, 7).

4. Installation according to Claim 3, **characterized in that** said first field includes at least one final destination station address (6).

5. Installation according to Claim 4, **characterized in that** said first field includes a first pair of addresses comprising an initial source station address (7) and the final destination station address (6).

6. Installation according to one of Claims 1 to 5, **characterized in that** said messages in the second format include a second field (8, 9) forming at least part of the capsule.

7. Installation according to Claim 6, **characterized in that** said second field includes at least one intermediate destination station address (8).

8. Installation according to Claim 7, **characterized in that** said second field includes a second pair of addresses comprising the address of the last station, called the intermediate source station (9), having sent said message in the second format and the intermediate destination station address (8).

9. Installation according to one of Claims 1 to 8, **characterized in that** said messages in the second format include a data item (10) representative of the type of information that they contain.

10. Installation according to Claim 9, **characterized in that** said chosen criterion relates to the type of information (10) contained in the messages received from a stage.

11. Installation according to one of Claims 1 to 10, **characterized in that** said messages in the second format include at least one other data item, in particular representative of their sequence number (11) .

12. Installation according to one of Claims 1 to 11, **characterized in that** each network is chosen from the radio network and the wired network.

13. Installation according to Claim 12, **characterized in that** the format of a radio network is chosen from at least the format of the "HIPERLAN" standard and the format of the IEEE 802.11 standard, and **in that** the format of a wired network is chosen from at least the ISO standards for the IEEE 802.3, 802.5 and 802.14 standards.

14. Installation according to one of Claims 4 to 13, **characterized in that** said management stage (5) includes routing means (14, 18, 20) suitable for storing at least one routing table including at least the addresses of the intermediate destination stations with which the station hosting it can exchange messages in the second format, and **in that** said routing means (14, 18, 20) are arranged, on the one hand, to extract the first field (6, 7) of a received message, to determine from the routing table an intermediate destination station address (8) with which to optimize the transmission of said message to the final destination station (6), the address of which is contained in said first extracted field, and on the other hand, to form a second field containing said extracted intermediate destination station address (8) and intended, either, when the message is from the driver stage (2), to replace the one initially contained in the second field of the received message to be forwarded, or, when the message is from the network stage (3), to complement its content with a view to its transmission.

15. Installation according to Claim 14, **characterized in that** said routing means (14, 18, 20) also include computation means (18) suitable for modifying the content of said routing table based on routing information contained in the messages that are of service message type received in the second format from the network.

16. Installation according to one of Claims 14 and 15, **characterized in that** at least one of the stations (S) provided with a management stage (5) includes at least one other driver stage (2-2) linked to said management stage and one other communication card (1-2) connected to another network, and **in that** said management stage (5) is suitable for choosing at least one of the networks for message transmission, according to the intermediate destination station address (8) contained in the second field of the message to be transmitted.

17. Installation according to one of Claims 5 to 16, **characterized in that** the management stage includes de-encapsulation/encapsulation means (17) suitable for extracting a second field, or at least part of the capsule, from a message from the driver stage (2) or for adding a second field to a message intended for at least one station of the network via this driver stage (2).

18. Installation according to one of Claims 1 to 17, **characterized in that** the management stage (5) includes means of managing messages that are of service message type (15).

19. Installation according to Claim 18, **characterized in that** the service message management means (15) are suitable for generating service messages "to be broadcast" for multiple final destination stations belonging to at least one network.

20. Installation according to one of Claims 18 and 19, **characterized in that** the service message management means (15) include timer means suitable for counting down a chosen time, and **in that** the chosen condition for transmission of a service message is verified on completion of downcounting.

21. Installation according to one of Claims 18 to 20, dependent on Claim 14, **characterized in that** the chosen condition for transmission of a service message is verified each time the routing table is modified.

22. Installation according to one of Claims 1 to 21, **characterized in that** the stations (S) include means (19) of configuring the various stages and card(s) connected to the latter and to said operating system by said interface means.

23. Installation according to Claim 18 in combination with Claim 22, **characterized in that** the chosen condition for transmission of a service message is verified on receipt of a local request from the network stage (3) or from the configuration means (19).

24. Installation according to Claim 16 in combination with one of Claims 22 and 23, **characterized in that** said routing information is contained in messages originating from the configuration means (19).

25. Installation according to one of Claims 1 to 24, **characterized in that** the management stage (5) includes synchronization means (21, 22) arranged to generate messages that are of frequency and time synchronization message type intended for certain other stations, and, on receipt of a synchronization message, to extract from them the information with which to place the transmission/reception means of the communication card (1) of its station in the state corresponding to said extracted information.

26. Installation according to Claim 25, **characterized in that** the synchronization means (21, 22) are arranged to generate said synchronization message spontaneously, in particular periodically.

27. Installation according to one of Claims 25 and 26, **characterized in that** the chosen condition for transmission of a synchronization message is verified on receipt of a local request from the network stage (3) or from the configuration means (19).

28. Installation according to one of Claims 25 to 27, **characterized in that** the synchronization means (21, 22) are arranged to generate interrogation messages requesting the sending of a synchronization message.

29. Installation according to Claim 9 in combination with one of Claims 15 to 28, **characterized in that** said management stage (5) includes switching means (16) connected to said encapsulation/deencapsulation means (17), to said routing means (14, 18, 20), to said service message management means (15) and to said synchronization means (21, 22).

30. Installation according to Claim 29, **characterized in that** said switching means (16) are arranged to determine, from the type of said messages received, the stage (stages), out of the network stage (3) and the driver stage (2), and/or the means, out of the routing means (14, 18, 20), the de-encapsulation/encapsulation means (17), the synchronization means (21, 22) and the service message management means (15), affected by a message that they have received, and for transmitting said message to the duly determined stage (stages) or means.

31. Installation according to one of Claims 1 to 30, **characterized in that** the management stage (5) is part of the driver stage (2).

32. Method of transmitting messages between stations (S) of an installation according to one of the preceding claims, each station including:
an operating system (4),
a "network" stage (3) for processing and generating messages in a first format,
a communication card (1) suitable for exchanging messages in a second format with at least one network,
a "driver" stage (2) suitable for placing messages received from the card (1) or from the network stage (3) respectively in the first format or the second format so they can be transmitted to said network stage (3) or to said card (1), and
means of interfacing said stages, card and operating system between themselves, **characterized in that** the method includes one and/or the other of the following steps:
- intercepting the messages in the first format that need to be exchanged between the network stage (3) and the driver stage (2) of a station (S), then analysing the information contained in said intercepted messages so as to decide on how to continue with their transmission, according to at least one criterion relating to said analysed information,
- generating a message of a selected type in the second format with a view to its transmission in the network when a chosen transmission condition is verified.

## Patentansprüche

1. Anordnung für Nachrichtenübertragung mit Stationen (S), von denen jede umfasst:
- ein Betriebssystem (4),
- eine "Netz"-Stufe (3) zur Verarbeitung und Erzeugung der Nachrichten eines ersten Formats,
- eine Kommunikationskarte (1), fähig Nachrichten eines zweiten Formats mit wenigstens einem Netzwerk auszutauschen,
- eine "Pilot"-Stufe (2), fähig von der Karte (1) oder von der Netzstufe (3) empfangene Nachrichten jeweils in das erste Format oder das zweite Format umzusetzen, um sie zur genannten Netzstufe (3) oder zur genannten Karte (1) zu übertragen, und
- Schnittstelleneinrichtungen zwischen den genannten Stufen, der Karte und dem Betriebssystem untereinander,
**dadurch gekennzeichnet, dass** wenigstens bestimmte Stationen (S) eine Verwaltungsstufe (5) umfassen, mit dem genannten Betriebssystem (4) durch die genannten Schnittstelleneinrichtungen gekoppelt und fähig, die Nachrichten des ersten Formats abzufangen, die durch die Netzstufe (3) und die Pilotstufe (2) ausgetauscht werden müssen, um die Informationen zu analysieren, die sie enthalten, und über die Fortsetzung bzw. Weiterführung ihrer Übertragung zu entscheiden, in Abhängigkeit von wenigstens einem Kriterium, das die genannten analysierten Informationen betrifft, und/oder fähig, Nachrichten eines gewählten Typs im zweiten Format zu erzeugen hinsichtlich ihrer Sendung bzw. Einspeisung in das Netzwerk über die genannte Karte (1), wenn eine gewählte Sendebedingung verifiziert ist.

2. Anordnung nach Anspruch 1, **dadurch gekennzeichnet, dass** das genannte Betriebssystem (4) vom Multitasking-Typ ist.

3. Anordnung nach einem der Ansprüche 1 und 2, **dadurch gekennzeichnet, dass** die genannten Nachrichten im zweiten Format ein erstes Feld (6,7) umfassen.

4. Anordnung nach Anspruch 3, **dadurch gekennzeichnet, dass** das erste Feld wenigstens eine Endzielstationsadresse (6) umfasst.

5. Anordnung nach Anspruch 4, **dadurch gekennzeichnet, dass** das erste Feld ein erstes Adressenpaar enthält, eine Anfangsquellenstationsadresse (7) und die Endzielstationsadresse (6) umfassend.

6. Anordnung nach einem der Ansprüche 1 bis 5, **dadurch gekennzeichnet, dass** die genannten Nachrichten im zweiten Format ein wenigstens einen Kapselteil bildendes zweites Feld (8,9) umfassen.

7. Anordnung nach Anspruch 6, **dadurch gekennzeichnet, dass** das genannte zweite Feld wenigstens eine Zwischenzielstationsadresse (8) umfasst.

8. Anordnung nach Anspruch 7, **dadurch gekennzeichnet, dass** das genannte zweite Feld ein zweites Adressenpaar enthält, das die Adresse der Zwischenquellenstation (9) genannten letzten Station, welche die genannte Nachricht im zweiten Format gesendet hat, und die Zwischenzielstationsadresse (8) umfasst.

9. Anordnung nach einem der Ansprüche 1 bis 8, **dadurch gekennzeichnet, dass** die genannten Nachrichten im zweiten Format eine Größe (10) enthalten, die repräsentativ ist für den Informationstyp, den sie enthalten.

10. Anordnung nach Anspruch 9, **dadurch gekennzeichnet, dass** das genannte gewählte Kriterium den Typ (10) der in den empfangenen Nachrichten einer Stufe enthalten Informationen betrifft.

11. Anordnung nach einem der Ansprüche 1 bis 10, **dadurch gekennzeichnet, dass** die genannten Nachrichten im zweiten Format wenigstens eine weitere, insbesondere für ihre Sequenznummer (11) repräsentative Größe enthalten.

12. Anordnung nach einem der Ansprüche 1 bis 11, **dadurch gekennzeichnet, dass** jedes Netzwerk ausgewählt wird zwischen Funknetz und Drahtnetz.

13. Anordnung nach Anspruch 12, **dadurch gekennzeichnet, dass** das Format eines Funknetzes ausgewählt wird zwischen wenigstens dem Format der HIPERLAN-Norm und dem Format der IEEE-Norm 802.11, und **dadurch**, dass das Format eines Drahtnetzes ausgewählt wird unter wenigstens den ISO-Standards für die IEEE-Normen 802.3, 802.5 und 802.14.

14. Anordnung nach einem der Ansprüche 1 bis 13, **dadurch gekennzeichnet, dass** die genannte Verwaltungsstufe (5) Routing-Einrichtungen (14,18,20) umfasst, fähig wenigstens eine Routing-Tabelle zu speichern, die wenigstens die Adressen der Zwischenzielstationen enthält, mit denen die Station, die sie aufnimmt, Nachrichten im zweiten Format austauschen kann, und **dadurch**, dass die genannten Routing-Einrichtungen (14,18,20) einerseits befähigt sind, das erste Feld (6,7) einer empfangenen Nachricht zu extrahieren, um in der Routing-Tabelle eine Zwischenzielstationsadresse (8) zu bestimmen, was ermöglicht, die Übertragung der genannten Nachricht bis zu der Endzielstation (6) zu optimieren, deren Adresse in dem genannten ersten extrahierten Feld enthalten ist, und andererseits befähigt sind, ein zweites Feld zu bilden, das die genannte Zwischenzielstationsadresse (8) enthält und dazu bestimmt ist, entweder, wenn die Nachricht von der Pilotstufe (2) stammt, die ursprünglich in dem zweiten Feld der zu übertragenden empfangenen Nachricht enthaltene zu ersetzen, oder, wenn die Nachricht von der Netzstufe (3) stammt, ihren Inhalt hinsichtlich ihrer Übertragung zu komplettieren.

15. Anordnung nach Anspruch 14, **dadurch gekennzeichnet, dass** die genannten Routing-Einrichtungen (14,18,20) außerdem Recheneinrichtungen (18) umfassen, fähig den Inhalt der genannten Routing-Tabelle aufgrund von Routing-Informationen zu modifizieren, die in Nachrichten enthalten sind, die vom Dienstnachrichtentyp sind, empfangen im zweiten Format, vom Netzwerk stammend.

16. Anordnung nach einem der Ansprüche 14 und 15, **dadurch gekennzeichnet, dass** wenigstens eine der mit einer Verwaltungsstufe (5) ausgerüsteten Stationen (S) wenigstens eine weitere, mit der genannten Verwaltungsstufe verbundene Pilotstufe (2-2) sowie eine weitere, mit einem anderen Netzwerk verbundene Kommunikationskarte (1-2) umfasst, und **dadurch**, dass die genannte Verwaltungsstufe (5) fähig ist, hinsichtlich der Übertragung von Nachrichten wenigstens eines der Netzwerke in Abhängigkeit von der in dem zweiten Feld der zu übertragenden Nachricht enthaltenen Zwischenzielstationsadresse (8) zu wählen.

17. Anordnung nach einem der Ansprüche 5 bis 16, **dadurch gekennzeichnet, dass** die Verwaltungsstufe Verkapselungs-/Entkapselungseinrichtungen (17) umfasst, fähig ein zweites Feld oder wenigstens einen Teil einer Kapsel einer von der Pilotstufe (2) stammenden Nachricht zu extrahieren, oder einer für wenigstens eine Station des Netzwerks bestimmte Nachricht über diese Pilotstufe (2) ein zweites Feld hinzuzufügen.

18. Anordnung nach einem der Ansprüche 1 bis 17, **dadurch gekennzeichnet, dass** die Verwaltungsstufe (5) Verwaltungseinrichtungen (15) von Nachrichten umfasst, die vom Dienstnachrichtentyp sind.

19. Anordnung nach Anspruch 18, **dadurch gekennzeichnet, dass** die Dienstnachrichtenverwaltungseinrichtungen (15) fähig sind, Dienstnachrichten für multiple, zu wenigstens einem Netzwerk gehörende Endzielstationen "zu streuen".

20. Anordnung nach einem der Ansprüche 18 und 19, **dadurch gekennzeichnet, dass** die Dienstnachrichtenverwaltungseinrichtungen (15) Verzögerungseinrichtungen umfassen, befähigt zum Rückwärtszählen einer gewählten Zeitdauer, und **dadurch**, dass die gewählte Sendebedingung einer Dienstnachricht am Ende des Rückwärtszählens verifiziert wird.

21. Anordnung nach einem der Ansprüche 18 und 20, in Abhängigkeit von Anspruch 14, **dadurch gekennzeichnet, dass** die gewählte Sendebedingung einer Dienstnachricht bei jeder Modifikation der Routing-Tabelle verifiziert wird.

22. Anordnung nach einem der Ansprüche 1 bis 21, **dadurch gekennzeichnet, dass** die Stationen (S) Konfigurationseinrichtungen (19) der verschiedenen Stufen und der Karte(n) umfassen, die durch die genannten Schnittstelleneinrichtungen mit ihnen sowie mit dem genannten Betriebssystem verbunden sind.

23. Anordnung nach Anspruch 18 in Verbindung mit Anspruch 22, **dadurch gekennzeichnet, dass** die gewählte Sendebedingung einer Dienstnachricht beim Empfang einer lokalen Abfrage bzw. durch eine lokale Abfrage der Netzstufe (3) oder der Konfigurationseinrichtungen (19) verifiziert wird.

24. Anordnung nach Anspruch 16 in Verbindung mit einem der Ansprüche 22 und 23, **dadurch gekennzeichnet, dass** die genannten Routing-Informationen in Nachrichten enthalten sind, die von den Konfigurationseinrichtungen (19) stammen.

25. Anordnung nach einem der Ansprüche 1 bis 24, **dadurch gekennzeichnet, dass** die Verwaltungsstufe (5) Synchronisationseinrichtungen (21,22) umfasst, fähig für bestimmte andere Stationen bestimmte Nachrichten des Typs Frequenz- und Zeitsynchronisationsnachricht zu erzeugen, und, beim Empfang einer Synchronisationsnachricht, aus ihr die Informationen zu extrahieren, um die Sende-Empfangseinrichtungen der Kommunikationskarte (1) ihrer Station in den den genannten extrahierten Informationen entsprechenden Zustand zu versetzen.

26. Anordnung nach Anspruch 25, **dadurch gekennzeichnet, dass** die Synchronisationseinrichtungen (21,22) fähig sind, die genannte Synchronisationsnachricht spontan zu erzeugen, insbesondere periodisch.

27. Anordnung nach einem der Ansprüche 25 und 26, **dadurch gekennzeichnet, dass** die gewählte Sendebedingung einer Synchronisationsnachricht beim Empfang einer lokalen Abfrage bzw. durch eine lokale Abfrage der Netzstufe (3) oder der Konfigurationseinrichtungen (19) verifiziert wird.

28. Anordnung nach einem der Ansprüche 25 bis 27, **dadurch gekennzeichnet, dass** die Synchronisationseinrichtungen (21,22) fähig sind, Abfragenachrichten zu erzeugen, die das Senden einer Synchronisationsnachricht fordern.

29. Anordnung nach Anspruch 9 in Verbindung mit einem der Ansprüche 15 bis 28, **dadurch gekennzeichnet, dass** die Verwaltungsstufe (5) Weicheneinrichtungen (16) umfassen, verbunden mit den genannten Verkapselungs-/Entkapselungseinrichtungen (17), den genannten Routing-Einrichtungen (14,18,20), den genannten Dienstnachrichten-Verwaltungseinrichtungen (15) und den genannten Synchronisationseinrichtungen (21,22).

30. Anordnung nach Anspruch 29, **dadurch gekennzeichnet, dass** die genannten Weicheneinrichtungen (16) fähig sind, aufgrund des Typs der empfangenen Nachrichten die Stufe(n) - Netzstufe (3) oder Pilotstufe (2) - und/oder die Einrichtungen unter den Routingeinrichtungen (14,18,20), den Kapselungs-/Entkapselungseinrichtungen (17), den Synchronisationseinrichtungen (21,22) und den Dienstnachrichten-Verwaltungseinrichtungen (15) zu bestimmen.

31. Anordnung nach einem der Ansprüche 1 bis 30, **dadurch gekennzeichnet, dass** die Verwaltungsstufe (5) Teil der Pilotstufe (2) ist.

32. Verfahren zur Übertragung von Nachrichten zwischen den Stationen (S) einer Anordnung nach einem der vorangehenden Ansprüche, von denen jede umfasst:
- ein Betriebssystem (4),
- eine "Netz"-Stufe (3) zur Verarbeitung und Erzeugung der Nachrichten eines ersten Formats,
- eine Kommunikationskarte (1), fähig Nachrichtungen eines zweiten Formats mit wenigstens einem Netzwerk auszutauschen,
- eine "Pilot"-Stufe (2), fähig von der Karte (1) oder der Netzstufe (3) empfangene Nachrichten jeweils in das erste Format oder das zweite Format umzusetzen, um sie zu der Netzstufe (3) oder der Karte (1) zu übertragen, und
- Schnittstelleneinrichtungen der genannten Stufen, der Karte und des Betriebssystems untereinander,
**dadurch gekennzeichnet, dass** es den einen und/oder anderen der folgenden Schritte umfasst:
- Abfangen der Nachrichten des ersten Formats, die ausgetauscht werden müssen zwischen der Netzstufe (3) und der Pilotstufe (2) einer Station (S), dann Analysieren der in den abgefangenen Nachrichten enthaltenen Informationen, um über die Fortsetzung bzw. Weiterführung ihrer Übertragung zu entscheiden, in Abhängigkeit von wenigstens einem die analysierten Informationen betreffenden Kriterium,
- Erzeugen einer Nachricht eines im zweiten Format gewählten Typs hinsichtlich ihrer Sendung bzw. Einspeisung in das Netzwerk, wenn eine gewählte Sendebedingung verifiziert ist.
